# EUROPÄISCHE PATENTSCHRIFT

(11) **EP 4 083 451 B1**
(45) Veröffentlichungstag und Bekanntmachung des Hinweises auf die Patenterteilung: **28.06.2023**
(21) Anmeldenummer: 22166946.8
(22) Anmeldetag: 06.04.2022
(51) Int. Cl.: F16B 37/06

(54) **SELBSTSTANZENDES FUNKTIONSELEMENT, ZUSAMMENBAUTEIL UND VERFAHREN ZUM HERSTELLEN EINES ZUSAMMENBAUTEILS**
SELF-STAMPING FUNCTIONAL ELEMENT, ASSEMBLY AND METHOD FOR PRODUCING AN ASSEMBLY
ÉLÉMENT FONCTIONNEL AUTO-POINÇONNANT, COMPOSANT D'ASSEMBLAGE ET PROCÉDÉ DE FABRICATION D'UN COMPOSANT D'ASSEMBLAGE

(30) Priorität: 27.04.2021 DE 102021110729
(43) Veröffentlichungstag der Anmeldung: 02.11.2022
(73) Patentinhaber: Profil Verbindungstechnik GmbH & Co. KG, 61381 Friedrichsdorf (DE)
(72) Erfinder: Mordelt, André, Frankfurt am Main (DE)
(74) Vertreter: Manitz Finsterwald Patent- und Rechtsanwaltspartnerschaft mbB

(56) Entgegenhaltungen:
- EP-A1- 3 216 556
- EP-A2- 1 553 312
- DE-A1-102008 057 903

## Beschreibung

Die vorliegende Erfindung betrifft ein selbststanzendes Funktionselement, ein Zusammenbauteil, das ein Werkstück und ein selbststanzendes Funktionselement umfasst, und ein Verfahren zum Herstellen eines solchen Zusammenbauteils. Derartige Funktionselemente weisen in der Regel einen Funktionsabschnitt auf, der wiederum zur Befestigung weiterer Komponenten dient. Sie finden unter anderem im Automobilbau eine breite Anwendung.

Bei Funktionselementen kann es sich um Bolzenelemente, deren Schaft mit einem Gewinde versehen sein kann, oder um Mutterelemente handeln, die zum Beispiel ein Innengewinde aufweisen.

Funktionselemente sind in verschiedenen Ausführungen bekannt. Einerseits gibt es beispielsweise Nietelemente, beispielsweise Nietmuttern, die einen Nietabschnitt aufweisen, welcher bei der Anbringung an einem Blechteil verformt wird, um einen Nietbördel auszubilden und mit einem Kopfteil eine ringförmige Aufnahme für den Rand eines Lochs im Blechteil zu bilden. Bei solchen Nietelementen wird also das Funktionselement bei der Anbringung an das Blechteil verformt. Ferner sind Einpresselemente bekannt, bei denen das Element selbst bei der Anbringung an einem Blechteil nicht absichtlich verformt wird. Vielmehr wird das Blechmaterial selbst verformt, um dieses in Eingriff mit Hinterschneidungen des jeweiligen Einpresselements zu bringen.

Es ist grundsätzlich bekannt, das Setzen der Funktionselemente, insbesondere Nietelemente, selbststanzend durchzuführen (siehe z. B. EP 3 216 556 A1). Dabei wird ein Butzen aus dem Bauteil ausgestanzt, der in der Regel im Nietabschnitt verbleibt, wobei ein Funktionsabschnitt des Funktionselements, im Fall der Nietmutter insbesondere ein Innengewinde, durch den Butzen blockiert werden kann.

Zur Umgehung dieses Problems kann der Butzen beispielsweise so klein ausgestanzt werden, dass dieser durch das Innengewinde abgeführt werden kann. Dazu ist jedoch eine sehr starke Umformung des Nietabschnitts nötig, wodurch dessen Neigung zum Aufreißen stark erhöht wird. Zudem kann eine Beschädigung des Innengewindes bei der Butzenabfuhr und ein Verkanten des Butzens im Innengewinde nicht ausgeschlossen werden. Es ist auch möglich, den blockierenden Butzen durch einen durch das Innengewinde geführten Stempel auszutreiben. Dies erfordert aber einen weiteren Arbeitsschritt.

Es ist eine Aufgabe der vorliegenden Erfindung, ein selbststanzendes Funktionselement zu schaffen, dass sich mit einem geringen Montageaufwand zuverlässig an einem Werkstück befestigen lässt. Ferner sollen ein Zusammenbauteil aus dem Werkstück und dem Element und ein Verfahren zur Herstellung des Zusammenbauteils angegeben werden.

Diese Aufgabe wird durch den jeweiligen Gegenstand der unabhängigen Ansprüche gelöst. Vorteilhafte Ausgestaltungen sind Gegenstand der Unteransprüche und in der Beschreibung und den Zeichnungen angegeben.

Das erfindungsgemäße selbststanzende Funktionselement dient zum Befestigen an einem Werkstück, insbesondere an einem Blechteil, und umfasst einen Kopfteil und einen Funktionsabschnitt. Der Kopfteil weist eine Anschlagfläche zum Einleiten einer in eine Stanzrichtung gerichteten Stanzkraft in das Funktionselement und einen sich in der Stanzrichtung von dem Kopfteil weg erstreckenden Nietabschnitt auf, der ein freies Ende umfasst, welches mit einer ersten Stanzkante zum Ausstanzen eines Butzens aus dem Werkstück versehen ist. Der Funktionsabschnitt weist einen von dem Nietabschnitt radial umgebenen und sich in der Stanzrichtung von dem Kopfteil weg erstreckenden Stanzpiloten mit einer zweiten Stanzkante zum Stanzen eines Lochs in den Butzen auf. Die zweite Stanzkante ist gegenüber der ersten Stanzkante in der Stanzrichtung zurückversetzt.

Das erfindungsgemäße Funktionselement ist geeignet, in ein nicht vorgelochtes Werkstück, insbesondere in ein Blechteil, mittels Stanzen eingebracht zu werden. Beim Einbringen des Funktionselements in das Werkstück wird mittels der ersten Stanzkante ein Butzen aus dem Werkstück herausgestanzt und das Funktionselement mittels des Nietabschnitts an dem Werkstück befestigt, indem der Nietabschnitt so umgeformt wird, dass er einen in axialer Richtung wirkenden Hinterschnitt bildet und das Funktionselement dadurch sicher an dem Werkstück gehalten ist.

Bei dem Stanzvorgang wird der Butzen in der Regel an der radialen Innenwand des Nietabschnitts festgeklemmt und verbleibt dort. Um jedoch die Funktion des Funktionsabschnitts ohne Einschränkungen zu gewährleisten, wird mittels der zweiten Stanzkante, die gegenüber der ersten Stanzkante zurückversetzt ist, im Laufe des weiteren Stanzvorgangs ein Loch in den Butzen gestanzt, sodass ein Butzenring entsteht, der zwischen dem Stanzpiloten und dem Nietabschnitt festgeklemmt werden kann. Der Funktionsabschnitt ist dadurch axial freigelegt.

Somit kann das erfindungsgemäße Funktionselement selbststanzend, also mit relativ geringem Montageaufwand, an dem Werkstück befestigt werden, wobei gleichzeitig eine einwandfreie Funktion des Funktionsabschnitts gewährleistet ist.

Insbesondere kann es sich bei dem üblicherweise aus Metall, insbesondere Stahl bestehenden Funktionselement um ein Mutterelement handeln, allerdings ist auch die Ausbildung als Bolzenelement denkbar. Auch bei einem Bolzenelement kann es nämlich erforderlich sein, dass das Kopfteil von Seiten des Nietabschnitts zumindest abschnittsweise zugänglich ist, beispielsweise wenn dort ein Funktionsabschnitt angeordnet ist, wie etwa eine Sackbohrung mit oder ohne Innengewinde.

Das Mutterelement weist vorzugsweise ein Innengewinde auf, welches den Funktionsabschnitt bildet, wohingegen ein Bolzenelement einen mit Außengewinde versehenen Schaft aufweisen kann. Anstelle des Gewindes können auch andere Merkmale vorgesehen sein, die zum Beispiel zur Befestigung einer weiteren Komponente oder zur Bereitstellung einer anderen Funktionalität geeignet sind. Der Funktionsabschnitt kann auch abschnittsweise oder vollständig als glatter Stift bzw. als glattes Loch ausgebildet sein.

In vorteilhafter Ausgestaltung ist zwischen dem Nietabschnitt und dem Stanzpiloten ein insbesondere ringförmiger Spalt zum Aufnehmen des Butzenrings ausgebildet. Somit kann die Lage des Butzenrings nach dem Stanzvorgang so festgelegt werden, dass dieser den Funktionsabschnitt nicht beeinträchtigt.

Der Spalt kann in radialer Richtung durch eine radiale Außenfläche des Stanzpiloten und durch eine radiale Innenfläche des Nietabschnitts begrenzt sein. Zur Sicherung des Butzenrings können die Innenfläche des Nietabschnitts und/oder die Außenfläche des Stanzpiloten eine oder mehrere radial nach innen ragende Erhebungen aufweisen, beispielsweise in Form zumindest einer in axialer Richtung verlaufenden Rippe, die eine größere axiale Erstreckung aufweist als die Dicke des Werkstücks. Mit der Erhebung kann der aus dem Werkstück herausgestanzte Butzen beziehungsweise der aus dem Butzen herausgestanzte Butzenring an dem Funktionselement auf einfache Weise zuverlässig gesichert werden, wenn nämlich im Zuge des Stanzprozesses ein Abschnitt der Erhebung abgeschabt wird und abgeschabtes Material einen sichernden Hinterschnitt bildet.

Vorzugsweise sind der Nietabschnitt und/oder der Stanzpilot ringförmig, insbesondere kreisringförmig, oval oder polygonal, ausgebildet. Im Falle einer ovalen oder polygonalen Ausgestaltung des Nietabschnitts wird eine automatische Verdrehsicherung des Funktionselements an dem Werkstück erzielt.

Der Kopfteil kann flanschartig ausgebildet sein und einen Werkstückanlageabschnitt aufweisen, von welchem sich der Nietabschnitt und der Stanzpilot weg erstrecken. Dadurch wird erreicht, dass das Funktionselement fest und stabil an dem Werkstück anliegt.

Vorzugsweise umfasst der Werkstückanlageabschnitt eine erste Anlagefläche und eine zweite Anlagefläche, die insbesondere ringförmig ausgebildet sind, wobei die erste Anlagefläche zwischen dem Stanzpiloten und dem Nietabschnitt angeordnet ist und die zweite Anlagefläche radial außerhalb des Nietabschnitts angeordnet ist. Mit der zweiten Anlagefläche kann das Funktionselement regelmäßig an dem Werkstück anliegen oder auf dem Werkstück aufliegen, während die erste Anlagefläche als Anlagefläche oder axiale Begrenzung für den Butzenring dient. Insbesondere kann die erste Anlagefläche gegenüber der zweiten Anlagefläche in der Stanzrichtung zurückversetzt sein.

Das Verhältnis einer Erstreckung des Nietabschnitts im nicht umgeformten Zustand in der Stanzrichtung zu einer Erstreckung des Stanzpiloten in der Stanzrichtung kann etwa zwei bis etwa sechs, vorzugsweise etwa drei bis etwa fünf, betragen. Dadurch ist gewährleistet, dass einerseits der Nietabschnitt eine ausreichende Höhe aufweist, um umgeformt zu werden und einen Hinterschnitt zu bilden, andererseits aber auch der Stanzpilot eine ausreichende Höhe aufweist, um den Butzenring zwischen dem Nietabschnitt und dem Stanzpiloten einzuklemmen.

In vorteilhafter Ausgestaltung erstrecken sich der Nietabschnitt und der Stanzpilot parallel zueinander, insbesondere koaxial, sodass beide Stanzvorgänge und der Nietvorgang einfach und effektiv in einem Arbeitsschritt miteinander kombiniert werden können.

Der Stanzpilot kann einen Hinterschnitt aufweisen, der vorzugsweise durch eine konische Außenwand gebildet ist. Die Außenwand kann also relativ zu der Stanzrichtung geneigt sein und in der Stanzrichtung auseinanderlaufen. Um den Hinterschnitt zu bilden und den Butzenring dennoch effektiv an der Außenfläche des Stanzpiloten sichern zu können, bietet es sich an, den Neigungswinkel relativ gering zu halten, beispielsweise im Bereich von bis zu 20°, vorzugsweise bis zu 10°, insbesondere 5° oder weniger.

Das freie Ende des Nietabschnitts kann radial außen zumindest abschnittsweise abgerundet oder geneigt sein, sodass sich die Rundung oder Neigung von der an dem freien Ende radial innen angeordneten Stanzkante aus gesehen in der Stanzrichtung zurückgerichtet erstreckt. Beim Stanzvorgang wird dadurch das Einbringen des Nietabschnitts in das Stanzloch erleichtert.

Das Funktionselement kann wenigstens ein Verdrehsicherungsmerkmal aufweisen, das vorzugsweise als Rippe oder Nut ausgebildet ist. Insbesondere kann das Funktionselement mehrere Verdrehsicherungsmerkmale aufweisen, die insbesondere in gleichen Abständen zueinander an einer jeweiligen Außenfläche des Nietabschnitts und/oder des Werkstückanlageabschnitts angeordnet sind.

Das erfindungsgemäße Zusammenbauteil weist ein Werkstück, insbesondere ein Blechteil, mit einem Stanzloch und ein zuvor beschriebenes Funktionselement auf, welches unter Heraustrennen eines Stanzbutzens mittels der ersten Stanzkante in das Stanzloch eingebracht ist, sodass umgeformtes Material des Nietabschnitts an das Stanzloch angrenzendes Material des Werkstücks zumindest abschnittsweise hintergreift. Insbesondere kann ein mittels des Stanzpiloten aus dem Stanzbutzen herausgetrennter Butzenring in radialer Richtung zwischen dem Nietabschnitt und dem Stanzpiloten aufgenommen sein. Durch das Heraustrennen des Butzenrings aus dem Butzen ist der Funktionsabschnitt freigehalten, sodass dessen ordnungsgemäße Funktion gewährleistet ist. Zudem kann das Zusammenbauteil durch Stanzen, also ohne Vorlochen, hergestellt werden, sodass eine aufwandsarme Montage gegeben ist.

Das umgeformte Material kann einen in Umfangsrichtung geschlossenen Hinterschnitt bilden, um das Funktionselement sicher an dem Werkstück zu halten. Vorzugsweise ist das Material des Nietabschnitts zum Bilden des Hinterschnitts radial nach außen umgeformt.

In bevorzugter Ausgestaltung ist ein durch die erste Stanzkante erzeugter Stanzrand durch die Umformung des Nietabschnitts gebördelt. Der Nietabschnitt legt sich bei dem Umformvorgang dicht um den Stanzrand und formt diesen wiederum um, sodass ein Bördel des Rands entsteht. Der Nietabschnitt und der Stanzrand liegen dann eng und weitgehend spielfrei aneinander an, sodass das Funktionselement stabil den dem Werkstück gehalten ist.

Ein das Stanzloch umgebender Montagebereich des Werkstücks kann unter Ausbildung einer Vertiefung umgeformt sein, wobei der umgeformte Nietabschnitt und der Stanzpilot in der Stanzrichtung vollständig in der Vertiefung aufgenommen sind. Somit ist das Werkstück zu einer Seite hin, selbst im Bereich des angebrachten Funktionselements, flach und ohne Erhebungen ausführbar.

Das erfindungsgemäße Verfahren dient zum Herstellen des zuvor beschriebenen Zusammenbauteils und umfasst die folgenden Schritte:
- Bereitstellen eines zuvor beschriebenen Funktionselements,
- Bereitstellen eines Werkstücks, insbesondere eines Blechteils,
- Einleiten einer Stanzkraft in das Funktionselement zum Erzeugen eines Stanzlochs in dem Werkstück unter Heraustrennung eines Stanzbutzens mittels der ersten Stanzkante des Nietabschnitts und zum Heraustrennen eines Butzenrings aus dem Stanzbutzen mittels der zweiten Stanzkante des Stanzpiloten und
- Umformen von Material des Nietabschnitts, um an das Stanzloch angrenzendes Material des Werkstücks zumindest abschnittsweise zu hintergreifen.

Das Material des Nietabschnitts kann zum Bilden eines in Umfangsrichtung geschlossenen Hinterschnitts nach außen umgeformt werden.

Das Umformen des Materials des Nietabschnitts kann beispielsweise mittels einer Matrize erfolgen, wobei das Material des Nietabschnitts durch Pressen des freien Endes gegen eine sich quer zur Stanzrichtung erstreckende Umformgeometrie der Matrize nach außen umgeformt wird, und wobei die Umformgeometrie vorzugsweise eine im Querschnitt gekrümmte Umformfläche aufweist. Durch das Verwenden der Matrize kann das Umformen des Nietabschnitts automatisch, das heißt lediglich durch die Stanzbewegung in der Stanzrichtung, ausgeführt werden, sobald das freie Ende des Nietabschnitts die Umformgeometrie der Matrize kontaktiert. Ein separater Schritt zum Umformen des Nietabschnitts ist nicht nötig, sodass die Montage mit vergleichsweise geringem Aufwand erfolgen kann.

Vorzugsweise wird ein das Stanzloch umgebender Montagebereich des Werkstücks mittels einer die Umformgeometrie umgebenden und der Stanzrichtung entgegengerichteten Erhebung der Matrize umgeformt. So wird in dem Montagebereich des Werkstücks eine Vertiefung erzeugt, in welcher der umgeformte Nietabschnitt und der Stanzpilot in der Stanzrichtung aufgenommen sind.

Das Heraustrennen des Butzenrings kann mittels einer mit dem Stanzpiloten zusammenwirkenden Kante der Matrize erfolgen.

Mit anderen Worten: Gemäß einer Ausführungsform des Verfahrens erfolgt das Ausstanzen des Butzens in Zusammenwirken einer ersten Kante der Matrize mit der ersten Stanzkante des Elements, während das Loch in dem Butzen durch ein Zusammenwirken einer zweiten Kante der Matrize mit der zweiten Stanzkante des Elements erfolgt. Bevorzugt sind die beiden Kanten der Matrize koaxial und/oder in einer Ebene angeordnet, wobei die erste Matrizenkante radial außerhalb der zweiten Matrizenkante angeordnet ist. Die zweite Matrizenkante umgibt bevorzugt einen Kanal, durch den der aus dem Butzen ausgestanzte Butzen ausgestoßen werden kann.

Die Erfindung wird nachfolgend anhand von vorteilhaften Ausführungsformen rein beispielhaft erläutert. In den Zeichnungen, die die Ausführungsformen schematisch veranschaulichen, zeigt
- Fig. 1: eine perspektivische Ansicht eines Funktionselements gemäß einem Ausführungsbeispiel,
- Fig. 2: eine weitere perspektivische Ansicht des Funktionselements aus Fig. 1,
- Fig. 3: das Funktionselement aus Fig. 1, dargestellt im Halbschnitt,
- Fig. 4: das Funktionselement aus Fig. 1, ein Werkstück und eine Matrize, jeweils dargestellt im Halbschnitt,
- Fig. 5: ein Zusammenbauteil gemäß einem Ausführungsbeispiel und
- Fig. 6: eine vergrößerte Ansicht des Details D aus Fig. 5.

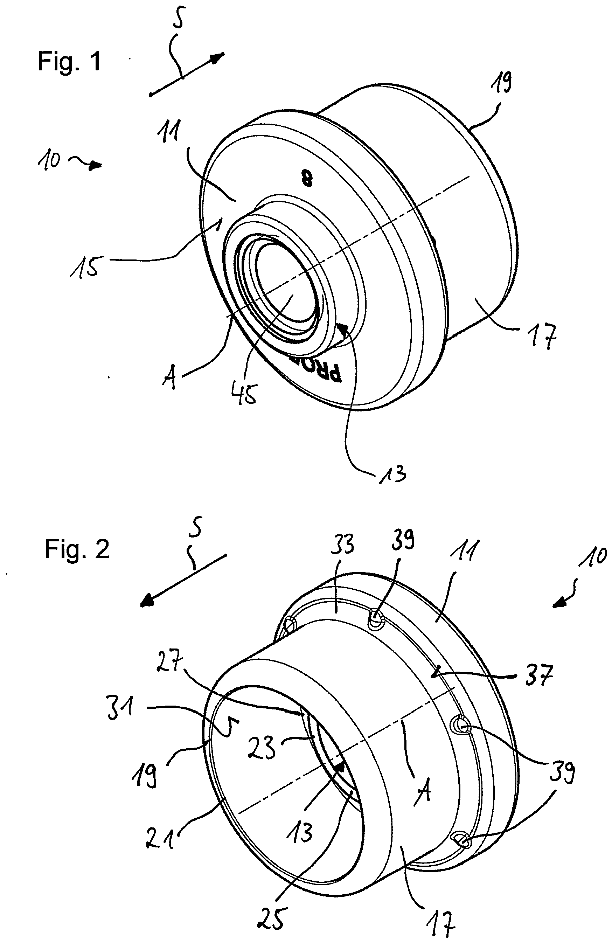

Fig. 1 und 2 zeigen ein Funktionselement 10 in unterschiedlichen, perspektivischen Ansichten, welches als selbststanzende Nietmutter zum Stanzen in einer Stanzrichtung S ausgebildet ist. Im vorliegenden Beispiel verläuft die Stanzrichtung S parallel zu der Erstreckungsrichtung der Symmetrieachse A des Funktionselements 10.

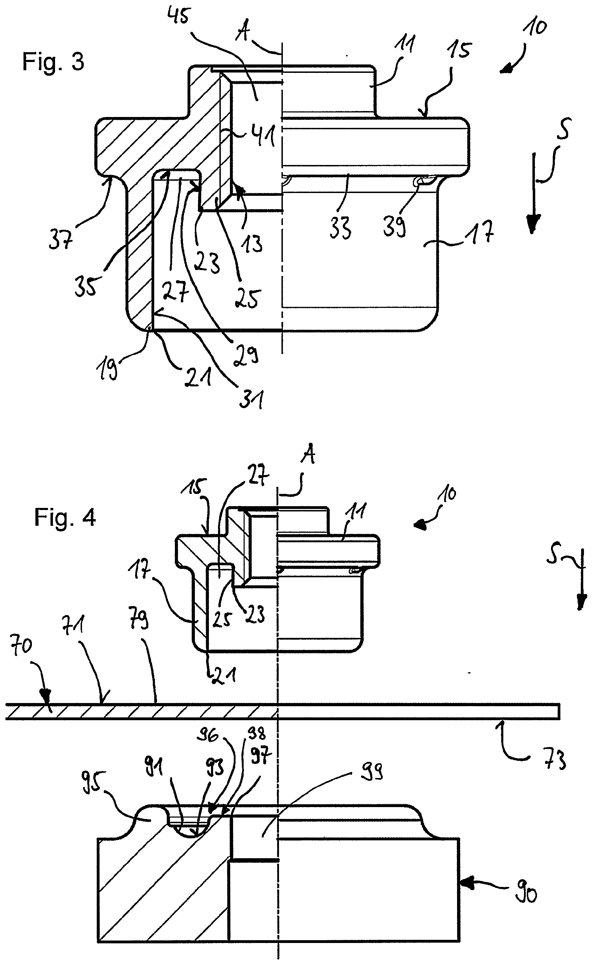

Das Funktionselement 10 umfasst einen flanschartig ausgebildeten und mit einem Werkstückanlageabschnitt 33 versehenen Kopfteil 11 und einen Funktionsabschnitt 13. Der Kopfteil 11 ist mit einer Anschlagfläche 15, die senkrecht zu der Stanzrichtung S verläuft, und einem ringförmigen Nietabschnitt 17, der sich von dem Werkstückanlageabschnitt 33 in der Stanzrichtung S weg erstreckt, versehen. Der Funktionsabschnitt 13 umfasst eine koaxial zu der Symmetrieachse A verlaufende Bohrung 45, die mit einem Innengewinde 41 versehen ist (siehe Fig. 3), und einen ringförmigen, sich koaxial zu dem Nietabschnitt 17 in der Stanzrichtung S von dem Werkstückanlageabschnitt 33 weg erstreckenden Stanzpiloten 25, der radial von dem Nietabschnitt 17 umgeben ist.

Der Nietabschnitt 17 weist ein radial außen abgerundetes freies Ende 19, das radial innen mit einer ersten Stanzkante 21 versehen ist. Der Stanzpilot 25 ist indes mit einer zweiten Stanzkante 23 ausgestattet, welche gegenüber der ersten Stanzkante 21 in der Stanzrichtung S zurückversetzt ist.

Der Werkstückanlageabschnitt 33 umfasst eine in Fig. 3 sichtbare, ringförmige erste Anlagefläche 35 und eine ringförmige zweite Anlagefläche 37. Die erste Anlagefläche 35 ist gegenüber der zweiten Anlagefläche 37 in der Stanzrichtung S zurückversetzt und verbindet eine radiale Außenfläche 29 des Stanzpiloten 25 mit einer radialen Innenfläche 31 des Nietabschnitts 17, sodass ein zwischen dem Nietabschnitt 17 und dem Stanzpiloten 25 angeordneter ringförmiger Spalt 27 axial durch die erste Anlagefläche 35 und radial durch die radiale Außenfläche 29 sowie die radiale Innenfläche 31 begrenzt ist.

Eine Außenwand des Stanzpiloten 25, und damit die Außenfläche 29, verläuft leicht konisch und in der Stanzrichtung auseinanderlaufend mit einem Neigungswinkel relativ zu der Stanzrichtung S, der im vorliegenden Beispiel etwa 5° beträgt und sich allgemein im Bereich von bis zu 20°, vorzugsweise bis zu 10°, insbesondere 5° oder weniger bewegen kann.

Das Verhältnis einer Erstreckung des Nietabschnitts 17 in der Stanzrichtung S, gemessen von der ersten Anlagefläche 35 bis zur ersten Stanzkante 21, zu einer Erstreckung des Stanzpiloten 25 in der Stanzrichtung S, gemessen von der ersten Anlagefläche 35 bis zur zweiten Stanzkante 23, beträgt im vorliegenden Beispiel etwa vier. Das Verhältnis kann sich allerdings im Bereich von etwa zwei bis etwa sechs, vorzugsweise etwa drei bis etwa fünf, bewegen.

Wie insbesondere Fig. 2 und 3 anschaulich zeigen, ist der Werkstückanlageabschnitt 33 mit mehreren in gleichen Abständen zueinander angeordneten Verdrehsicherungsmerkmalen 39 in Form von Rippen versehen. Alternativ oder zusätzlich zu den Rippen wären allerdings auch Nuten oder anders geformte Elemente als Verdrehsicherungsmerkmale 39 denkbar. Zudem könnten die Verdrehsicherungsmerkmale 39 grundsätzlich auch an einer radialen Außenfläche des Nietabschnitts 17 angebracht sein.

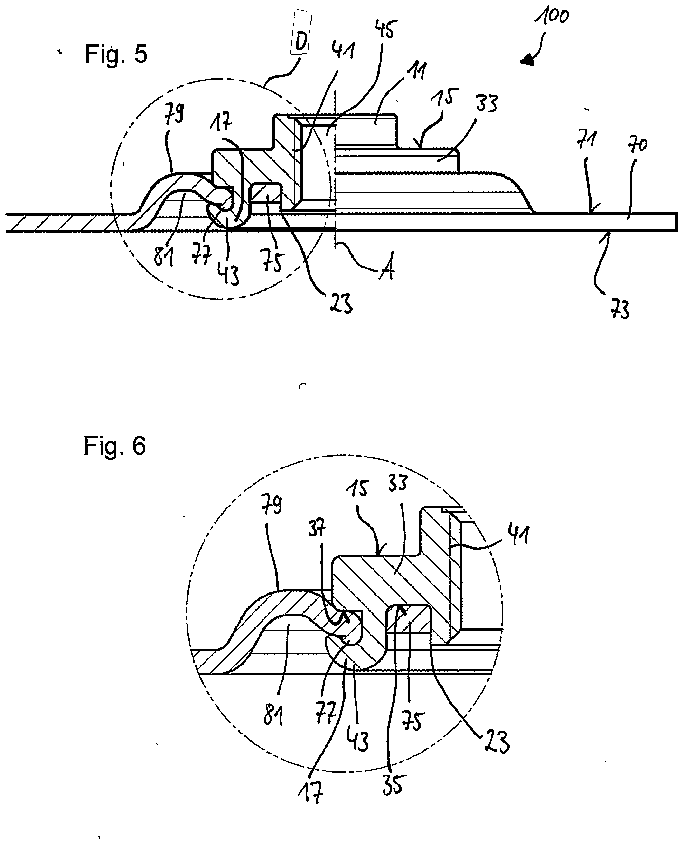

Mit Blick auf Fig. 4 und 5 wird nachfolgend ein Verfahren zum Herstellen eines Zusammenbauteils 100 mit dem Funktionselement 10 beschrieben.

Zunächst wird, wie in Fig. 4 gezeigt, neben dem Funktionselement 10 ein Werkstück 70, hier ein Blechteil, mit einer ersten Oberfläche 71 und einer zweiten Oberfläche 73 bereitgestellt. Zudem wird im vorliegenden Beispiel eine Matrize 90 verwendet, die eine Umformgeometrie 91 aufweist, welche eine im Querschnitt gekrümmte Umformfläche 93 hat.

Sodann werden das Funktionselement 10, das Werkstück 70 und die Matrize 90 zueinander ausgerichtet, und es wird eine in der Stanzrichtung S wirkende Stanzkraft über die Anschlagfläche 15 in das Funktionselement 10 eingeleitet. Das Funktionselement 10, genauer gesagt die erste Stanzkante 21 des Nietabschnitts 17, trifft dann auf die erste Oberfläche 71 in einem Montagebereich 79 des Werkstücks 70, sodass dort in Zusammenwirken mit einer Kante 96 der Matrize 90 ein Stanzbutzen aus dem Werkstück 70 herausgetrennt wird und dadurch ein von einem Stanzrand 77 begrenztes Stanzloch entsteht.

Im weiteren Verlauf des Stanzprozesses wird der Butzen, der nun auf einer durch die Kanten 96, 97 begrenzten Ringfläche 98 aufliegt, tiefer in den durch den Nietabschnitt 17 begrenzten Hohlraum eingeschoben bis die gegenüber der ersten Stanzkante 21 in der Stanzrichtung S zurückversetzte zweite Stanzkante 23 den Stanzbutzen kontaktiert, sodass mittels der zweiten Stanzkante 23 und einer dafür vorgesehenen Kante 97 der Matrize 90 ein mittig angeordnetes Loch in den Stanzbutzen gestanzt wird. Anders ausgedrückt wird ein Butzenring 75 aus dem Stanzbutzen mittels der zweiten Stanzkante 23 herausgetrennt, welcher in dem Spalt 27 fixiert wird, wie in Fig. 5 und 6 gezeigt. Der aus dem Butzen herausgetrennte Butzen wird durch einen Kanal 99 der Matrize 90 nach unten - d.h. in Stanzrichtung - zuverlässig entsorgt, so dass der Funktionsabschnitt 13 frei zugänglich ist. Dies geschieht gleichsam automatisch in Zuge des Stanzprozesses. Zusätzliche Arbeitsschritte sind nicht erforderlich.

Aufgrund der Stanzkraft wird außerdem das freie Ende 19 des Nietabschnitts 17 gegen die Umformgeometrie 91 gepresst, sodass Material des Nietabschnitts 17 radial nach außen umgeformt wird, um an das Stanzloch angrenzendes Material des Werkstücks 70 zu hintergreifen und so einen in Umfangrichtung geschlossenen und axial wirkenden Hinterschnitt 43 zu bilden. Der Nietabschnitt 17 legt sich bei dem Umformvorgang dicht um den Stanzrand 77 und erzeugt einen Bördel an dem Stanzrand 77, wie Fig. 5 und 6 anschaulich zeigen.

Ferner wird in dem Montagebereich 79 das Material des Werkstücks 70 gegen eine die Umformgeometrie 91 umgebende und der Stanzrichtung S entgegengerichtete Erhebung 95 der Matrize 90 gepresst, sodass in dem Montagebereich 79 eine Vertiefung 81 erzeugt wird, in welcher der umgeformte Nietabschnitt 17 und der Stanzpilot 25 in der Stanzrichtung S aufgenommen sind, siehe insbesondere Fig. 6.

Das beschriebene Zusammenbauteil 100 kann folglich mittels des Funktionselements 10 selbststanzend, also mit relativ geringem Montageaufwand, hergestellt werden. Aufgrund des zweiten Stanzvorgangs mit dem zurückversetzten Stanzpiloten 25 kann zudem der Funktionsabschnitt 13, insbesondere das Innengewinde 41, freigehalten werden, sodass gleichzeitig eine einwandfreie Funktion des Funktionsabschnitts 13 gewährleistet ist.

### Bezugszeichenliste

- 10: Funktionselement
- 11: Kopfteil
- 13: Funktionsabschnitt
- 15: Anschlagfläche
- 17: Nietabschnitt
- 19: freies Ende
- 21: erste Stanzkante
- 23: zweite Stanzkante
- 25: Stanzpilot
- 27: Spalt
- 29: Außenfläche
- 31: Innenfläche
- 33: Werkstückanlageabschnitt
- 35: erste Anlagefläche
- 37: zweite Anlagefläche
- 39: Verdrehsicherungsmerkmal
- 41: Gewinde
- 43: Hinterschnitt
- 45: Bohrung
- 70: Werkstück
- 71: erste Oberfläche
- 73: zweite Oberfläche
- 75: Butzenring
- 77: Stanzrand
- 79: Montagebereich
- 81: Vertiefung
- 90: Matrize
- 91: Umformgeometrie
- 93: Umformfläche
- 95: Erhebung
- 96, 97: Kante
- 98: Ringfläche
- 99: Kanal
- 100: Zusammenbauteil
- A: Achse
- S: Stanzrichtung

## Patentansprüche

1. Selbststanzendes Funktionselement (10) zum Befestigen an einem Werkstück (70), insbesondere an einem Blechteil, umfassend
einen Kopfteil (11), der eine Anschlagfläche (15) zum Einleiten einer in eine Stanzrichtung (S) gerichteten Stanzkraft in das Funktionselement (10) und einen sich in der Stanzrichtung (S) von dem Kopfteil (11) weg erstreckenden Nietabschnitt (17) aufweist, der ein freies Ende (19) umfasst, welches mit einer ersten Stanzkante (21) zum Ausstanzen eines Butzens aus dem Werkstück (70) versehen ist, und
einen Funktionsabschnitt (13), der einen von dem Nietabschnitt (17) radial umgebenen und sich in der Stanzrichtung (S) von dem Kopfteil (11) weg erstreckenden Stanzpiloten (25) mit einer zweiten Stanzkante (23) zum Stanzen eines Lochs in den Butzen aufweist, wobei die zweite Stanzkante (23) gegenüber der ersten Stanzkante (21) in der Stanzrichtung (S) zurückversetzt ist.

2. Funktionselement (10) nach Anspruch 1,
**dadurch gekennzeichnet, dass** zwischen dem Nietabschnitt (17) und dem Stanzpiloten (25) ein insbesondere ringförmiger Spalt (27) zum Aufnehmen eines Butzenrings (75) ausgebildet ist, wobei der Spalt (27) vorzugsweise durch eine radiale Außenfläche (29) des Stanzpiloten (25) und durch eine radiale Innenfläche (31) des Nietabschnitts (17) begrenzt ist.

3. Funktionselement (10) nach Anspruch 1 oder 2,
**dadurch gekennzeichnet, dass** der Nietabschnitt (17) und/oder der Stanzpilot (25) ringförmig, insbesondere kreisringförmig, oval oder polygonal, ausgebildet sind.

4. Funktionselement (10) nach einem der Ansprüche 1 bis 3,
**dadurch gekennzeichnet, dass** der Kopfteil (11) flanschartig ausgebildet ist und einen Werkstückanlageabschnitt (33) aufweist, von dem sich der Nietabschnitt (17) und der Stanzpilot (25) weg erstrecken, wobei der Werkstückanlageabschnitt (33) vorzugsweise eine erste Anlagefläche (35) und eine zweite Anlagefläche (37) umfasst, die insbesondere ringförmig ausgebildet sind, wobei die erste Anlagefläche (35) zwischen dem Stanzpiloten (25) und dem Nietabschnitt (17) angeordnet ist und die zweite Anlagefläche (37) radial außerhalb des Nietabschnitts (17) angeordnet ist, und wobei ferner vorzugsweise die erste Anlagefläche (35) gegenüber der zweiten Anlagefläche (37) in der Stanzrichtung (S) zurückversetzt ist.

5. Funktionselement (10) nach einem der Ansprüche 1 bis 4,
**dadurch gekennzeichnet, dass** der Stanzpilot (25) einen Hinterschnitt aufweist, der vorzugsweise durch eine konische Außenwand gebildet ist.

6. Funktionselement (10) nach einem der Ansprüche 1 bis 5,
**dadurch gekennzeichnet, dass** das freie Ende (19) des Nietabschnitts (17) radial außen zumindest abschnittsweise abgerundet oder geneigt ist.

7. Funktionselement (10) nach einem der Ansprüche 1 bis 6,
**gekennzeichnet durch** wenigstens ein, vorzugsweise als Rippe oder Nut ausgebildetes, Verdrehsicherungsmerkmal (39), vorzugsweise mehrere Verdrehsicherungsmerkmale (39), die insbesondere in gleichen Abständen zueinander an dem Nietabschnitt (17) und/oder dem Werkstückanlageabschnitt (33) angeordnet sind.

8. Funktionselement (10) nach einem der Ansprüche 1 bis 7,
**dadurch gekennzeichnet, dass** der Funktionsabschnitt (13) mit einem Gewinde (41), insbesondere einem Innengewinde, versehen ist.

9. Funktionselement (10) nach einem der Ansprüche 1 bis 8,
**dadurch gekennzeichnet, dass** das Funktionselement (10) als selbststanzendes Mutterelement ausgebildet ist.

10. Zusammenbauteil (100), das ein Werkstück (70), insbesondere ein Blechteil, mit einem Stanzloch und ein Funktionselement (10) nach einem der Ansprüche 1 bis 9 aufweist, welches unter Heraustrennen eines Stanzbutzens mittels der ersten Stanzkante (21) in das Stanzloch eingebracht ist, sodass umgeformtes Material des Nietabschnitts (17) an das Stanzloch angrenzendes Material des Werkstücks (70) zumindest abschnittsweise hintergreift, insbesondere wobei ein mittels des Stanzpiloten (25) aus dem Stanzbutzen herausgetrennter Butzenring (75) in radialer Richtung zwischen dem Nietabschnitt (17) und dem Stanzpiloten (25) aufgenommen ist.

11. Zusammenbauteil (100) nach Anspruch 10,
**dadurch gekennzeichnet, dass** das umgeformte Material einen in Umfangsrichtung geschlossenen Hinterschnitt (43) bildet, wobei vorzugsweise das Material des Nietabschnitts (17) zum Bilden des Hinterschnitts (43) radial nach außen umgeformt ist.

12. Zusammenbauteil (100) nach Anspruch 10 oder 11,
**dadurch gekennzeichnet, dass** ein das Stanzloch umgebender Montagebereich (79) des Werkstücks (70) unter Ausbildung einer Vertiefung (81) umgeformt ist, wobei der umgeformte Nietabschnitt (17) und der Stanzpilot (25) in der Stanzrichtung (S) vollständig in der Vertiefung (81) aufgenommen sind.

13. Verfahren zum Herstellen eines Zusammenbauteils (100) nach einem der Ansprüche 10 bis 12, umfassend die Schritte:
- Bereitstellen eines Funktionselements (10) nach einem der Ansprüche 1 bis 9,
- Bereitstellen eines Werkstücks (70), insbesondere eines Blechteils,
- Einleiten einer Stanzkraft in das Funktionselement (10) zum Erzeugen eines Stanzlochs in dem Werkstück (70) unter Heraustrennung eines Stanzbutzens mittels der ersten Stanzkante (21) des Nietabschnitts (17) und zum Heraustrennen eines Butzenrings (75) aus dem Stanzbutzen mittels der zweiten Stanzkante (23) des Stanzpiloten (25) und
- Umformen von Material des Nietabschnitts (17), um an das Stanzloch angrenzendes Material des Werkstücks (70) zumindest abschnittsweise zu hintergreifen.

14. Verfahren nach Anspruch 13,
**dadurch gekennzeichnet, dass** das Umformen des Materials des Nietabschnitts (17) mittels einer Matrize (90) erfolgt, wobei das Material des Nietabschnitts (17) durch Pressen des freien Endes (19) gegen eine sich quer zur Stanzrichtung (S) erstreckende Umformgeometrie (91) der Matrize (90) nach außen umgeformt wird, wobei die Umformgeometrie (91) vorzugsweise eine im Querschnitt gekrümmte Umformfläche (93) aufweist, und wobei ferner vorzugsweise ein das Stanzloch umgebender Montagebereich (79) des Werkstücks (70) mittels einer die Umformgeometrie (91) umgebenden und der Stanzrichtung (S) entgegengerichteten Erhebung (95) der Matrize (90) umgeformt wird.

15. Verfahren nach Anspruch 14,
**dadurch gekennzeichnet, dass** das Heraustrennen des Butzenrings (75) mittels einer mit dem Stanzpiloten (25) zusammenwirkenden Kante (97) der Matrize (90) erfolgt.

## Claims

1. A self-punching functional element (10) for fastening to a workpiece (70), in particular to a sheet metal part, said self-punching functional element (10) comprising
a head part (11) which has an abutment surface (15) for introducing a punching force directed in a punching direction (S) into the functional element (10) and a rivet section (17) which extends away from the head part (11) in the punching direction (S) and which comprises a free end (19) which is provided with a first punching edge (21) for punching a slug out of the workpiece (70); and
a functional section (13) which has a punching pilot (25) which is radially surrounded by the rivet section (17), which extends away from the head part (11) in the punching direction (S), and which has a second punching edge (23) for punching a hole into the slug, wherein the second punching edge (23) is set back with respect to the first punching edge (21) in the punching direction (S).

2. A functional element (10) in accordance with claim 1,
**characterized in that** a gap (27), in particular an annular gap (27), for receiving a slug ring (75) is formed between the rivet section (17) and the punching pilot (25), with the gap (27) preferably being bounded by a radial outer surface (29) of the punching pilot (25) and by a radial inner surface (31) of the rivet section (17).

3. A functional element (10) in accordance with claim 1 or claim 2,
**characterized in that** the rivet section (17) and/or the punching pilot (25) is/are annular, in particular circular, oval or polygonal.

4. A functional element (10) in accordance with any one of the claims 1 to 3, **characterized in that** the head part (11) is flange-like and has a workpiece contact section (33), with the rivet section (17) and the punching pilot (25) extending away from said workpiece contact section (33), with the workpiece contact section (33) preferably comprising a first contact surface (35) and a second contact surface (37) which are in particular annular, with the first contact surface (35) being arranged between the punching pilot (25) and the rivet section (17) and the second contact surface (37) being arranged radially outside the rivet section (17), and with the first contact surface (35) further preferably being set back with respect to the second contact surface (37) in the punching direction (S).

5. A functional element (10) in accordance with any one of the claims 1 to 4, **characterized in that** the punching pilot (25) has an undercut which is preferably formed by a conical outer wall.

6. A functional element (10) in accordance with any one of the claims 1 to 5, **characterized in that** the free end (19) of the rivet section (17) is radially outwardly rounded or inclined at least in sections.

7. A functional element (10) in accordance with any one of the claims 1 to 6, **characterized by** at least one feature providing security against rotation (39), preferably formed as a rib or a groove, preferably a plurality of features providing security against rotation (39) which are in particular arranged at equal spacings from one another at the rivet section (17) and/or at the workpiece contact section (33).

8. A functional element (10) in accordance with any one of the claims 1 to 7, **characterized in that** the functional section (13) is provided with a thread (41), in particular with an internal thread.

9. A functional element (10) in accordance with any one of the claims 1 to 8, **characterized in that** the functional element (10) is configured as a self-punching nut element.

10. A component assembly (100) which has a workpiece (70), in particular a sheet metal part, having a punched hole and a functional element (10) in accordance with any one of the claims 1 to 9, said functional element (10) being inserted into the punched hole while separating a punched slug by means of the first punching edge (21) such that reshaped material of the rivet section (17) at least sectionally engages behind material of the workpiece (70) adjoining the punched hole, in particular wherein a slug ring (75) separated from the punched slug by means of the punching pilot (25) is received in a radial direction between the rivet section (17) and the punching pilot (25).

11. A component assembly (100) in accordance with claim 10, **characterized in that** the reshaped material forms an undercut (43) closed in a peripheral direction, with the material of the rivet section (17) preferably being radially outwardly reshaped to form the undercut (43).

12. A component assembly (100) in accordance with claim 10 or claim 11, **characterized in that** an assembly region (79) of the workpiece (70) surrounding the punched hole is reshaped while forming a recess (81), with the reshaped rivet section (17) and the punching pilot (25) being completely received in the recess (81) in the punching direction (S).

13. A method of manufacturing a component assembly (100) in accordance with any one of the claims 10 to 12, said method comprising the steps:
- providing a functional element (10) in accordance with any one of the claims 1 to 9;
- providing a workpiece (70), in particular a sheet metal part;
- introducing a punching force into the functional element (10) to produce a punched hole in the workpiece (70) while separating a punched slug by means of the first punching edge (21) of the rivet section (17) and to separate a slug ring (75) from the punched slug by means of the second punching edge (23) of the punching pilot (25); and
- reshaping material of the rivet section (17) to at least sectionally engage behind material of the workpiece (70) adjoining the punched hole.

14. A method in accordance with claim 13,
**characterized in that** the reshaping of the material of the rivet section (17) takes place by means of a die (90), with the material of the rivet section (17) being outwardly reshaped by pressing the free end (19) against a reshaping geometry (91) of the die (90) extending transversely to the punching direction (S), with the reshaping geometry (91) preferably having a reshaping surface (93) curved in cross-section, and with an assembly region (79) of the workpiece (70) surrounding the punched hole further preferably being reshaped by means of an elevated portion (95) of the die (90) surrounding the reshaping geometry (91) and directed opposite to the punching direction (S).

15. A method in accordance with claim 14,
**characterized in that** the separation of the slug ring (75) takes place by means of an edge (97) of the die (90) cooperating with the punching pilot (25).

## Revendications

1. Elément fonctionnel auto-poinçonnant (10) destiné à être fixé à une pièce (70), en particulier à une pièce en tôle, comprenant
une partie de tête (11) qui présente une surface de butée (15) pour appliquer dans l'élément fonctionnel (10) une force de poinçonnage dirigée dans une direction de poinçonnage (S), et une portion formant rivet (17) qui s'étend dans la direction de poinçonnage (S) en s'éloignant de la partie de tête (11) et qui présente une extrémité libre (19) pourvue d'une première arête de poinçonnage (21) pour découper une pastille dans la pièce (70), et
une portion fonctionnelle (13) qui comprend un pilote de poinçonnage (25) entouré radialement par la portion formant rivet (17) et s'étendant dans la direction de poinçonnage (S) en s'éloignant de la partie de tête (11), avec une deuxième arête de poinçonnage (23) pour poinçonner un trou dans la pastille, la deuxième arête de poinçonnage (23) étant en retrait par rapport à la première arête de poinçonnage (21) dans la direction de poinçonnage (S).

2. Elément fonctionnel (10) selon la revendication 1,
**caractérisé en ce qu'**une fente (27), en particulier de forme annulaire, est formée entre la portion formant rivet (17) et le pilote de poinçonnage (25) pour recevoir un anneau de pastille (75), la fente (27) étant de préférence délimitée par une surface extérieure radiale (29) du pilote de poinçonnage (25) et par une surface intérieure radiale (31) de la portion formant rivet (17).

3. Elément fonctionnel (10) selon la revendication 1 ou 2,
**caractérisé en ce que** la portion formant rivet (17) et/ou le pilote de poinçonnage (25) sont de forme annulaire, en particulier de forme circulaire, ovale ou polygonale.

4. Elément fonctionnel (10) selon l'une des revendications 1 à 3,
**caractérisé en ce que** la partie de tête (11) est réalisée en forme de bride et présente une portion d'appui de pièce (33) à partir de laquelle s'étendent la portion formant rivet (17) et le pilote de poinçonnage (25), la portion d'appui de pièce (33) comprenant de préférence une première surface d'appui (35) et une deuxième surface d'appui (37), qui sont en particulier réalisées en forme d'anneau, la première surface d'appui (35) étant disposée entre le pilote de poinçonnage (25) et la portion formant rivet (17), et la deuxième surface d'appui (37) étant disposée radialement à l'extérieur de la portion formant rivet (17), et en outre la première surface d'appui (35) étant de préférence en retrait par rapport à la deuxième surface d'appui (37) dans la direction de poinçonnage (S).

5. Elément fonctionnel (10) selon l'une des revendications 1 à 4,
**caractérisé en ce que** le pilote de poinçonnage (25) présente une contre-dépouille qui est de préférence formée par une paroi extérieure conique.

6. Elément fonctionnel (10) selon l'une des revendications 1 à 5,
**caractérisé en ce que** l'extrémité libre (19) de la portion formant rivet (17) est au moins localement arrondie ou inclinée radialement à l'extérieur.

7. Elément fonctionnel (10) selon l'une des revendications 1 à 6,
**caractérisé par** au moins une caractéristique anti-rotation (39) réalisée de préférence sous forme de nervure ou de rainure, de préférence plusieurs caractéristiques anti-rotation (39) qui sont disposées en particulier à des distances égales les unes des autres sur la portion formant rivet (17) et/ou sur la portion d'appui de pièce (33).

8. Elément fonctionnel (10) selon l'une des revendications 1 à 7,
**caractérisé en ce que** la portion fonctionnelle (13) est pourvue d'un pas de vis (41), en particulier d'un taraudage.

9. Elément fonctionnel (10) selon l'une des revendications 1 à 8,
**caractérisé en ce que** l'élément fonctionnel (10) est réalisé sous forme d'élément d'écrou auto-poinçonnant.

10. Composant d'assemblage (100) comprenant une pièce (70), en particulier une pièce en tôle, pourvue d'un trou de poinçonnage, et un élément fonctionnel (10) selon l'une des revendications 1 à 9, qui est inséré dans le trou de poinçonnage au moyen de la première arête de poinçonnage (21) en découpant une pastille de poinçonnage, de sorte que le matériau déformé de la portion formant rivet (17) vient engager par l'arrière au moins localement le matériau de la pièce (70) adjacent au trou de poinçonnage, en particulier, un anneau de pastille (75) découpé dans la pastille de poinçonnage au moyen du pilote de poinçonnage (25) étant logé, dans la direction radiale, entre la portion formant rivet (17) et le pilote de poinçonnage (25).

11. Composant d'assemblage (100) selon la revendication 10,
**caractérisé en ce que** le matériau déformé forme une contre-dépouille (43) fermée dans la direction circonférentielle, de préférence le matériau de la portion formant rivet (17) étant déformé radialement vers l'extérieur pour former la contre-dépouille (43).

12. Composant d'assemblage (100) selon la revendication 10 ou 11, **caractérisé en ce qu'**une zone de montage (79) de la pièce (70) entourant le trou de poinçonnage est déformée en formant une cavité (81), la portion formant rivet (17) déformée et le pilote de poinçonnage (25) étant logés complètement dans la cavité (81), dans la direction de poinçonnage (S).

13. Procédé de fabrication d'un composant d'assemblage (100) selon l'une des revendications 10 à 12, comprenant les étapes consistant à :
- fournir un élément fonctionnel (10) selon l'une des revendications 1 à 9,
- fournir une pièce (70), en particulier une pièce en tôle,
- appliquer une force de poinçonnage dans l'élément fonctionnel (10) pour créer un trou de poinçonnage dans la pièce (70) en découpant une pastille de poinçonnage au moyen de la première arête de poinçonnage (21) de la portion formant rivet (17) et pour découper un anneau de pastille (75) dans la pastille de poinçonnage au moyen de la deuxième arête de poinçonnage (23) du pilote de poinçonnage (25), et
- déformer le matériau de la portion formant rivet (17) afin d'engager par l'arrière au moins localement le matériau de la pièce (70) adjacent au trou de poinçonnage.

14. Procédé selon la revendication 13,
**caractérisé en ce que** la déformation du matériau de la portion formant rivet (17) est effectué au moyen d'une matrice (90), le matériau de la portion formant rivet (17) étant déformé vers l'extérieur en pressant l'extrémité libre (19) contre une géométrie de déformation (91) de la matrice (90), laquelle s'étend transversalement à la direction de poinçonnage (S), la géométrie de déformation (91) présentant de préférence une surface de déformation (93) à section transversale courbe, et en outre, de préférence, une zone de montage (79) de la pièce (70) entourant le trou de poinçonnage étant déformée au moyen d'un bossage (95) de la matrice (90), lequel entoure la géométrie de déformation (91) et est orienté dans le sens opposé à la direction de poinçonnage (S).

15. Procédé selon la revendication 14,
**caractérisé en ce que** le découpage de l'anneau de pastille (75) est effectué au moyen d'une arête (97) de la matrice (90), qui coopère avec le pilote de poinçonnage (25).
